# EUROPEAN PATENT SPECIFICATION

(11) **EP 3 902 996 B1**
(45) Date of publication and mention of the grant of the patent: **14.02.2024**
(21) Application number: 19829577.6
(22) Date of filing: 20.12.2019
(51) Int. Cl.: F03D 13/40

(54) **WIND TURBINE WITH HELIHOIST AND MOVABLE COOLER**
WINDTURBINE MIT HELIHOIST UND BEWEGLICHEM KÜHLER
ÉOLIENNE À HÉLITREUILLAGE ET REFROIDISSEUR MOBILE

(30) Priority: 28.12.2018 EP 18248267
(43) Date of publication of application: 03.11.2021
(73) Proprietor: Vestas Wind Systems A/S, 8200 Aarhus N (DK)
(72) Inventor: MØLLER, Lars Laursen, 8860 Ulstrup (DK)
(74) Representative: Vestas Patents Department
(86) International application number: PCT/EP2019/086523
(87) International publication number: WO 2020/136102

(56) References cited:
- EP-A1- 3 276 169
- US-A1- 2013 202 446
- US-A1- 2017 045 038

## Description

### Technical Field

The invention relates generally to wind turbines, and more particularly to a wind turbine having a helihoist.

### Background

Wind turbines are used to produce electrical energy using a renewable resource and without combusting a fossil fuel. Generally, a wind turbine converts kinetic energy from the wind into electrical power. A horizontal-axis wind turbine includes a tower, a nacelle located at the apex of the tower, and a rotor having a plurality of blades and supported in the nacelle by means of a shaft. The shaft couples the rotor either directly or indirectly with a generator, which is housed inside the nacelle. Consequently, as wind forces the blades to rotate, electrical energy is produced by the generator.

Components of the generator located within the nacelle generate significant heat during operation, which in turn, causes the temperature of the air in the nacelle and the generator components to increase. When the generator components are heated, the overall efficiency of power generation may be decreased. Therefore, the generator components and the nacelle may be cooled to ensure that the heat does not adversely affect power generation and/or damage the components.

Conventional wind turbines may include one or more cooling devices configured to remove the heat generated during operation of the wind turbine. The cooling devices may include standard heat sinks. Another exemplary cooling device is a cooler top positioned along one side (e.g., the roof or sides) of the nacelle and including one or more panels partially enclosed by a cover. The air flowing past the wind turbine cools a second fluid flowing through the panels, the second fluid being directed to other heat exchangers within the nacelle to remove heat from generator components and the nacelle. To this end, the cooling devices operate to thereby reduce the temperature of the nacelle and the generator components.

Wind turbines may include a helihoist platform ("helihoist") on top of the nacelle for receiving supplies/personnel hoisted from a hovering helicopter to the helihoist. The helihoist includes a platform and a railing surrounding the platform. As the helihoist is configured to support service technicians, the placement of the helihoist in relation to the nacelle is typically subject to numerous safety regulations in certain countries. For example, the railing of the helihoist may have to conform to a minimum height safety standard. In conventional wind turbines, the helihoist is generally positioned at a rear end of the nacelle roof (e.g., opposite to the rotor). In some installations, the cooler is mounted to the most rearward side of the helihoist (e.g., farthest from the rotor). To realize a good cooling effect, the cooler should be exposed to free flow of wind, but this also exposes the cooler to high winds during storms, such as hurricanes and typhoons, and hence high structural loads. By exposing the cooler to high winds, the cooler may be damaged, leading to higher repair and maintenance costs.

There is a desire to have larger platforms on the helihoist so large helicopters with large rotors can be utilized. A large helicopter with a large rotor could carry up to the platform either a single heavier load or more service technicians and components in a single lift.

As the power production per wind turbine increases, so does the required cooling capacity. Higher cooling capacity near the nacelle may be realized by adding coolers on the side of the nacelle, however, such coolers remains complicated to service as they are not readily accessible.

Thus, there remains a need to make the platform of a helihoist larger. There also remains a need for still higher cooling capacity while retaining an operable helihoist. Moreover, there remains a need for a wind turbine with a cooler installation that is able to withstand high winds.

US2017045038 discloses a heli-hoist pad that is incorporated into a wind turbine nacelle in a manner that is optimized for helicopter approach and positioning of the heli-hoist pad, such as by being located within a recess in an upper surface of the wind turbine nacelle. Heat exchangers may also be positioned within the free flow of wind outside of a nacelle in manners that provide for serviceability while also allowing for optimal positioning of a heli-hoist pad.

US2013202446 discloses a wind turbine with a tower, a nacelle rotatably arranged on the tower, and a helicopter landing pad arranged on the nacelle. The wind turbine has a rotor having at most two rotor blades and a locking device for locking the rotor in a position in which the rotor blades extend horizontally, and the helicopter landing pad is arranged on the nacelle in such a way that the cross-section of the upper tower section lies completely within the outer contour of the helicopter landing pad in the top view.

### Summary

To these and other ends, a wind turbine includes a tower and a nacelle disposed on the tower and includes a nacelle roof. The wind turbine further includes a rotor which includes a hub and at least one wind turbine blade. The rotor is operatively coupled to a generator. The wind turbine also includes a helihoist affixed to the nacelle roof and the helihoist has a platform with a first working surface. The platform is configured to be expandable to form a second working surface, such that the second working surface is greater than the first working surface.

In one embodiment the wind turbine further includes a cooler mounted to the nacelle and having an exposed wind area operable to remove heat from heat-generating components of the wind turbine. The cooler is movable between a first position and a second position, wherein at least a portion of the cooler forms part of the second working surface when in the second position.

The helihoist further includes a sidewall surrounding at least a portion of the first working surface and a sidewall structure movable between a first operative position and a second operative position, wherein the sidewall structure surrounds at least a portion of the second working surface when in the second operative position.

In another embodiment, the first position is an operable position such that the exposed wind area of the cooler is maximized. In one aspect, the second position is a stowed position such that the exposed wind area of the cooler is minimized. In another aspect, the cooler is positioned at least partially behind the nacelle in the second position, i.e., in the shadow of the nacelle with respect to the incoming wind.

In one embodiment, the cooler is slidably mounted to the nacelle such that the cooler is slidably movable between the first position and the second position. In another aspect, the cooler is slidably movable to a third position between the first position and the second position. In another aspect, the third position is an intermediate cooler position such that the exposed wind area of the cooler is smaller than the exposed wind area in the first position, but larger than in the second position, wherein the cooler in the intermediate cooler position remains operable to remove heat from heat-generating components of the wind turbine.

In one aspect, the wind turbine further includes a wind sensor and a controller operably coupled to the wind sensor. The controller adapted to move the cooler from the first position to the second position when the wind sensor measures a predetermined critical wind speed.

In another embodiment, the cooler is pivotally connected to the nacelle such that the cooler is pivotable between the first position and the second position.

In another embodiment, the helihoist further includes a secondary platform that is movable relative to the platform between a retracted position to an extended position. When the secondary platform is in the extended position, the secondary platform forms at least part of the second working surface. In one aspect, the helihoist further includes a sidewall surrounding at least a portion of the first working surface and a sidewall structure movable between a first operative position and a second operative position. The sidewall structure surrounds at least a portion of the second working surface when in the second operative position. In another aspect, the sidewall structure is affixed to and movable with the secondary platform.

The invention also contemplates methods for operating a wind turbine. In an exemplary embodiment, a method of operating a wind turbine includes providing the wind turbine with a tower and a nacelle disposed on the tower and includes a nacelle roof. The wind turbine further includes a rotor which includes a hub and at least one wind turbine blade. The rotor is operatively coupled to a generator and a cooler is mounted to the nacelle and has an exposed wind area operable to remove heat from heat-generating components of the wind turbine. The method includes slidably moving the cooler relative to the nacelle from a first position to a second position, such that the exposed wind area is smaller in the second position than in the first position.

In one embodiment, slidably moving the cooler further includes slidably moving the cooler at least partially behind the nacelle when in the second position, i.e., in the shadow of the nacelle with respect to the incoming wind. In another embodiment, the slidably moving step includes slidably moving the cooler from the first position to an intermediate position such that the exposed wind area of the cooler is smaller than the exposed wind area in the first position, but larger than in the second position. In still another embodiment, the wind turbine further includes a helihoist affixed to the nacelle roof and the helihoist has a platform with an effective working area and the method further includes increasing the effective working area of the platform by moving the cooler to the second position. In another embodiment, the platform has a perimeter and the helihoist includes a sidewall surrounding at least a portion of the perimeter of the platform. The helihoist also includes a movable sidewall structure, the method further includes moving the sidewall structure from a first sidewall structure position disposed atop the platform, to a second sidewall structure position such that the sidewall structure is disposed atop the cooler thereby increasing the effective working area of the platform. In yet another embodiment, the method further includes measuring a wind speed acting on the cooler and moving the cooler from the first position to the second position when the wind speed exceeds a predetermined critical wind speed.

In another exemplary embodiment, a method of operating a wind turbine includes providing the wind turbine with a tower and a nacelle disposed on the tower and includes a nacelle roof. The wind turbine includes a rotor which includes a hub and at least one wind turbine blade. The rotor is operatively coupled to a generator and a helihoist is affixed to the nacelle roof. The helihoist has a platform. A cooler is mounted to the nacelle and has an exposed wind area operable to remove heat from heat-generating components of the wind turbine. The method includes moving the cooler from a first position to a second position, such that the exposed wind area is smaller in the second position than in the first position.

In one embodiment, the cooler is slidably mounted to the nacelle, such that the moving step further includes sliding the cooler from the first position to the second position. In another embodiment, the cooler is pivotally connected to the nacelle, such that the moving step further includes pivoting the cooler from the first position to the second position. In one embodiment, the platform has a perimeter and the helihoist includes a sidewall affixed to and surrounding at least a portion of the perimeter of the platform. The platform further includes a sidewall structure movable between a first sidewall structure position and a second sidewall structure position and the method further includes moving the sidewall structure from the first sidewall structure position where the sidewall structure is disposed atop the platform to the second sidewall structure position where the sidewall structure is disposed atop the cooler. In one embodiment, the method further includes measuring a wind speed acting on the cooler and moving the cooler from the first position to the second position when the wind speed exceeds a predetermine critical wind speed.

In yet another example, a method of operating a wind turbine includes providing the wind turbine with a tower and a nacelle disposed on the tower and includes a nacelle roof. The wind turbine includes a rotor including a hub and at least one wind turbine blade. The rotor is operatively coupled to a generator and a helihoist is affixed to the nacelle roof. The helihoist has a platform with a first working surface. The method further includes expanding the platform to form a second working surface, wherein the second working surface is greater than the first working surface. In one embodiment, the wind turbine further includes a cooler operable to remove heat from heat-generating components of the wind turbine and the method further includes moving the cooler relative to the platform from a first position to a second position to increase the working area of the platform. In one aspect, the helihoist further includes a secondary platform that is movable relative to the platform and the method further includes moving the secondary platform from an retracted position to an extended position such that the secondary platform forms at least part of the second working surface. In another embodiment, the helihoist further includes a secondary platform movable relative to the platform and the method further includes moving the secondary platform from an retracted position to an extended position such that the secondary platform forms at least part of the second working surface.

In yet another exemplary embodiment, which is combinable with all other embodiments of the helihoist comprising a cooler, the wind turbine comprises a biasing means for biasing the cooler towards the second position.

In case of a failure of the primary system for moving and holding the cooler in the first position the cooler will automatically move to the second position. The second position is a position where the cooler is substantially behind the rear side of the nacelle and hence less exposed to extreme winds for example during a typhoon. Hence, the cooler will move behind the nacelle and reduce the impact of wind on the wind turbine generator during an extreme wind situation even if the primary system for moving the cooler should fail. This is highly advantageous as this redundant system for reducing the wind impact on the cooler allows for designing the wind turbine generator towards only the lower wind impact when the cooler is in the second position.

Moreover, the second position allows a helicopter to approach the turbine such that maintenance personnel can be hoisted down to or up from the helihoist to enable repair of the failed system.

In an embodiment, the biasing means is a spring mechanism.

In another embodiment the biasing means works under the assistance of gravity. As an example, the cooler is moved up and down relative to the helihoist via a lift system. The exemplary lift system may comprise a gear and pinion, an electric actuator, a hydraulic actuator or a chain and gear. The biasing means is integrated with the lift system.

On a lift system comprising a gear and pinion, the threads have an angle such that when the source of motive power for the gear is off the cooler will move towards the second position under the influence of gravity. This would also apply to a system with an electric actuator.

For a lift system comprising a hydraulic actuator, the oil may be allowed to flow back to a tank if the hydraulic pressure is off and thus allow the cooler to move to the second position under the force of gravity.

In relation to a chain and gear-based lift system the gear should allow the cooler to move towards the second position when unpowered.

Embodiments of the lift system may include springs to force the cooler towards the second position if the force of gravity is insufficient to move the cooler and dampers to ensure that the acceleration of the cooler during a sudden loss of power in the lift system is small enough to prevent the cooler form moving to fast and thereby get damaged, when the second position is reached.

### Brief Description of the Drawings

The accompanying drawings, which are incorporated in and constitute a part of this specification, illustrate one or more embodiments of the invention and, together with a general description of the invention given above, and the detailed description given below, serve to explain the invention.
Fig. 1 is a perspective view of a wind turbine;
Fig. 2A is a partial perspective view of the nacelle of the wind turbine of Fig. 1, including a cooler and a helihoist arrangement according to a first embodiment with the cooler in an operable position;
Fig. 2B is a partial perspective view of the cooler and helihoist arrangement of Fig. 2A with the cooler in a stowed position;
Fig. 3A is a partial perspective view of the nacelle of the wind turbine of Fig. 1, including a cooler and a helihoist arrangement according to a second embodiment with the cooler in an operable position;
Fig. 3B is a partial perspective view of the cooler and helihoist arrangement of Fig. 3A with the cooler in a stowed position;
Fig. 3C is a partial perspective view of the cooler and helihoist arrangement of Fig. 3B with a sidewall structure disposed above the top of the cooler;
Fig. 4A is a partial side view of the nacelle of the wind turbine of Fig. 1, including a cooler and a helihoist arrangement according to a third embodiment with the cooler in the operable position;
Fig. 4B is a partial side view of the cooler and helihoist arrangement of Fig. 4A with the cooler in a stowed position;
Fig. 4C is a partial side view of the cooler and helihoist arrangement of Fig. 4A with a sidewall structure disposed above the top of the cooler;
Fig. 5A is a partial side view of the nacelle of the wind turbine of Fig. 1, including a cooler and a helihoist arrangement according to a fourth embodiment with the cooler in the operable position;
Fig. 5B is a partial side view of the cooler and helihoist arrangement of Fig. 5A with the cooler in a stowed position;
Fig. 5C is a partial side view of the cooler and helihoist arrangement of Fig. 5A with a sidewall structure disposed above the top of the cooler;
Fig. 6A is a partial perspective view of the nacelle of the wind turbine of Fig. 1, including a cooler and a helihoist arrangement according to a fifth embodiment with the cooler in the stowed position;
Fig. 6B is a partial perspective view of the cooler and helihoist arrangement of Fig. 6A with a secondary platform extended over the cooler;
Fig. 6C is a partial perspective view of the nacelle of the wind turbine of Fig. 1, including the helihoist arrangement of Fig. 6A, but without the cooler;
Fig. 6D is a partial perspective view of the helihoist arrangement of Fig. 6C, with a secondary platform extended to expand the working surface;
Fig. 7 is a partial perspective view of the nacelle of the wind turbine of Fig. 1, including a cooler and a helihoist arrangement according to a sixth embodiment with the cooler in an operable position;
Fig. 8A is a partial side view of the nacelle of Fig. 7 with the cooler in the operable position; and
Fig. 8B is a partial side view of the nacelle of Fig. 7 with the cooler in a stowed position.

### Detailed Description

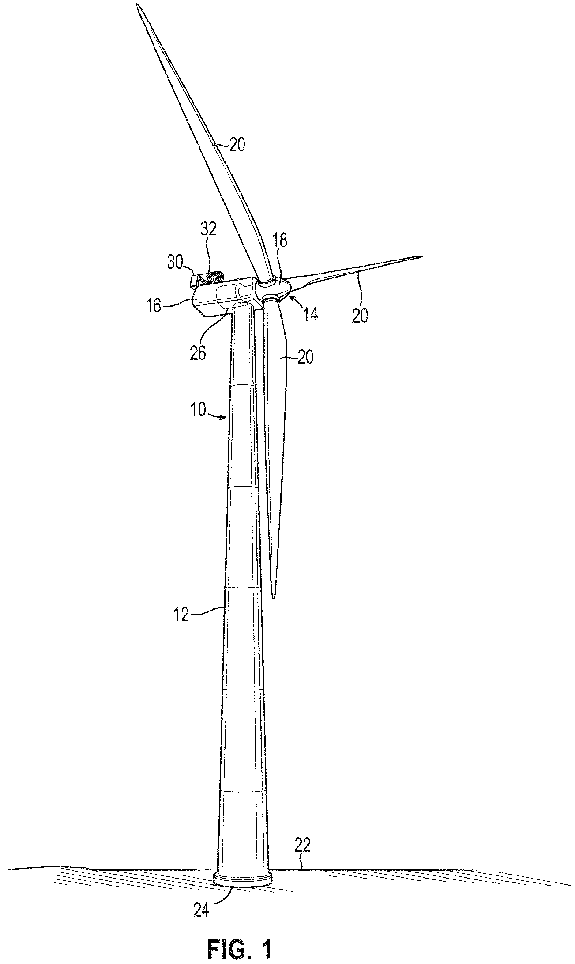

With reference to FIG. 1, a wind turbine 10 includes a tower 12, a nacelle 16 disposed at the apex of the tower 12, and a rotor 14 operatively coupled to a generator 26 housed inside the nacelle 16. In addition to the generator, the nacelle 16 houses miscellaneous components required for converting wind energy into electrical energy and various components needed to operate, control, and optimize the performance of the wind turbine 10. The tower 12 supports the load presented by the nacelle 16, the rotor 14, and other components of the wind turbine 10 that are housed inside the nacelle 16, and also operates to elevate the nacelle 16 and rotor 14 to a height above ground level or sea level, as may be the case, at which faster moving air currents of lower turbulence are typically found.

The rotor 14 of the wind turbine 10, which is represented as a horizontal-axis wind turbine, serves as the prime mover for the electromechanical system. Wind exceeding a minimum level will activate the rotor 14 and cause rotation in a substantially perpendicular direction to the wind direction. The rotor 14 of wind turbine 10 includes a central hub 18 and at least one blade 20 that projects outwardly from the central hub 18. In the representative embodiment, the rotor 14 includes three blades 20 circumferentially distributed about the central hub 18, but the number may vary. The wind turbine blades 20 are configured to interact with the passing air flow to produce lift that causes the rotor 14 to spin generally within a plane defined by the blades 20. The tower 12 includes a base 24 fixed to a support surface 22 which may, for example, be the ground or any other suitable support surface including a platform at sea.

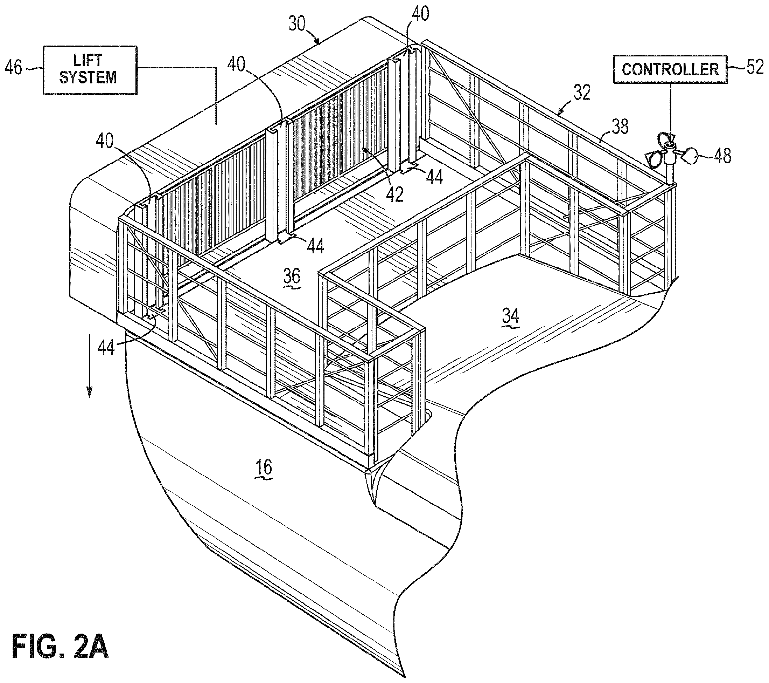

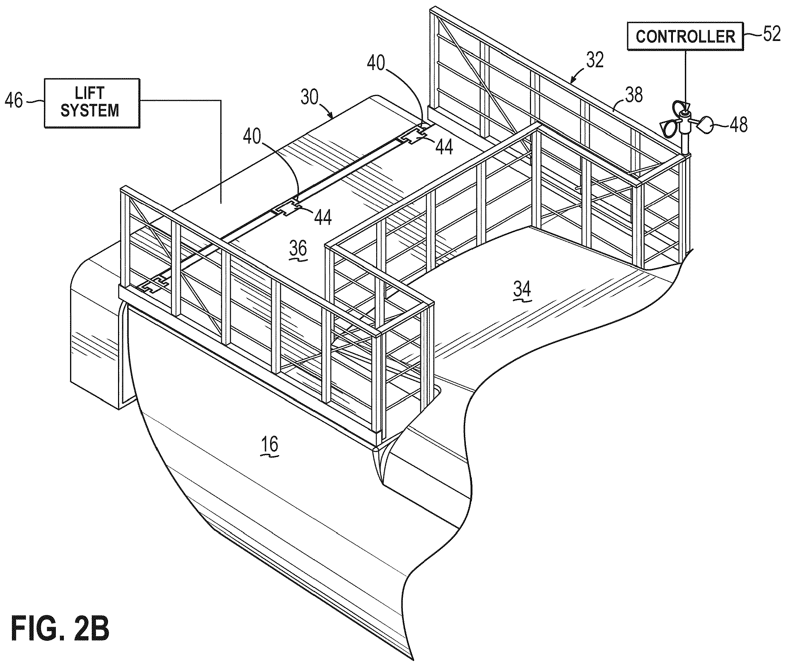

In order to provide cooling for the generator 26 and other heat-generating components associated with the wind turbine 10, the wind turbine 10 according to a first embodiment includes a cooler 30 as shown in FIG. 2A. The wind turbine 10 also includes a helihoist 32 for receiving, for example, turbine components and/or service technicians hoisted from a hovering helicopter or a landing airborne vehicle. The nacelle 16 has a nacelle roof 34 to which the helihoist 32 is attached. The helihoist 32 has a platform 36 surrounded by a protective barrier such as sidewalls 38 fixed to the platform 36. The sidewalls 38 may be tall enough to allow service technicians to work on the platform 36 without having to be tethered to either the platform 36 or the sidewalls 38. In one embodiment, the cooler 30 may extend across the entire width of the rear edge of the platform 36 and may be essentially the same height as the sidewalls 38 or a barrier may be arranged in front of the cooler 30. Consequently, the cooler 30 may serve as a barrier much like the sidewalls 38 do. Other protective barrier arrangements may also be employed besides the sidewalls 38 illustrated Figs. 2A and 2B so long as those protective barrier arrangements prevent a service technician from falling off the platform when they are not tethered.

Examples of airborne vehicles that can land on the helihoist platform 36 can be an unmanned aerial vehicle (UAV) or a so called drone or a helicopter, in which case the helihoist platform 36 should have no barrier.

The cooler 30 is shown in Fig. 2A in a first or normal operable position. That is, the cooler 30 is positioned in its most upward position relative to the helihoist 32 so that the cooler 30 may receive optimal airflow to cool the generator 26 and other components housed within the nacelle 16. In the normal operable position, a front face 42 of the cooler 30 has a maximum exposed wind area, i.e., the largest surface area exposed to the wind. In accordance with one aspect of the invention, when the wind turbine 10 is exposed to excessive high winds, such as during a storm, hurricane, or typhoon, the cooler 30 may be moved downward relative to the helihoist 32 so that the cooler 30 is substantially behind the rear side of the nacelle 16 as shown in Fig. 2B. The term "behind" means that the front face 42 of the cooler 30 confronts the rear wall of the nacelle 16 such that at least part of the cooler 30 is not subjected to the oncoming wind. In Fig. 2B, the cooler 30 is in a second or stowed position. In the stowed position, the front face 42 of the cooler 30 has a minimum exposed wind area, i.e., the least surface area exposed to the wind. To facilitate moving the cooler 30 downward, the cooler 30 may include sliding guides 40 affixed to the front face 42 of the cooler 30. The sliding guides 40 engage complimentary stationary guide members 44 affixed to the rear edge of the platform 36. In one embodiment, the sliding guide 40 and the stationary guide members 44 may be configured such that the cooler slides vertically between the operable and stowed positions. The cooler 30 is moved up and down relative to the helihoist 32 via a lift system 46, such as a gear and pinion, electric or hydraulic actuator, chain and gear, or other actuation system. It should be appreciated that other mechanical arrangements can be used to move the cooler 30 up and down relative to the helihoist 32 besides the sliding guides 40 and stationary guide members 44 shown in Figs. 2A and 2B.

In another aspect according to the invention, the cooler 30 may also be moved to a third or intermediate position (not shown) between the normal operable position (Fig. 2A) and the stowed position (Fig. 2B). In this intermediate position, the cooler 30 has an intermediate exposed wind area that is less than the maximum exposed wind area and greater than the minimum exposed wind area. In this way, the wind force may be reduced, but some level of cooling may still be provided. In other words, the cooler 30 remains operable in the intermediate position, but perhaps at a diminished capacity compared to being in the normal operable position.

In another aspect according to the invention, the nacelle 16 may include an anemometer, i.e., a wind sensor 48 (e.g., cup, hot wire, pressure tube, ultrasonic, laser doppler, etc.) that monitors the speed of the wind at or approaching the nacelle 16. The wind sensor 48 may be operably coupled to a controller 52 that may be configured to move the cooler 30 from the normal, operable position to the stowed position when the wind reaches a predetermined critical wind speed. For example, the wind turbine may reduce production at wind speeds above a first threshold, e.g. 25 m/s and completely shut down its production when the wind speed increases above a second threshold, e.g. 30 m/s and thus the controller 52 may be configured to lower the cooler 30 to the intermediate position and continue operation at reduced capacity between the first and second threshold and to the stowed position to protect the cooler 30 at higher wind speeds. The controller 52 may be configured to move the cooler 30 back to the normal operable position after the winds drop below the above threshold for a predefined period of time, for example, at least a period of 30 minutes. The wind turbine 10 may also include a manual control that a service technician could use to move the cooler 30 between the operable, intermediate, and stowed positions.

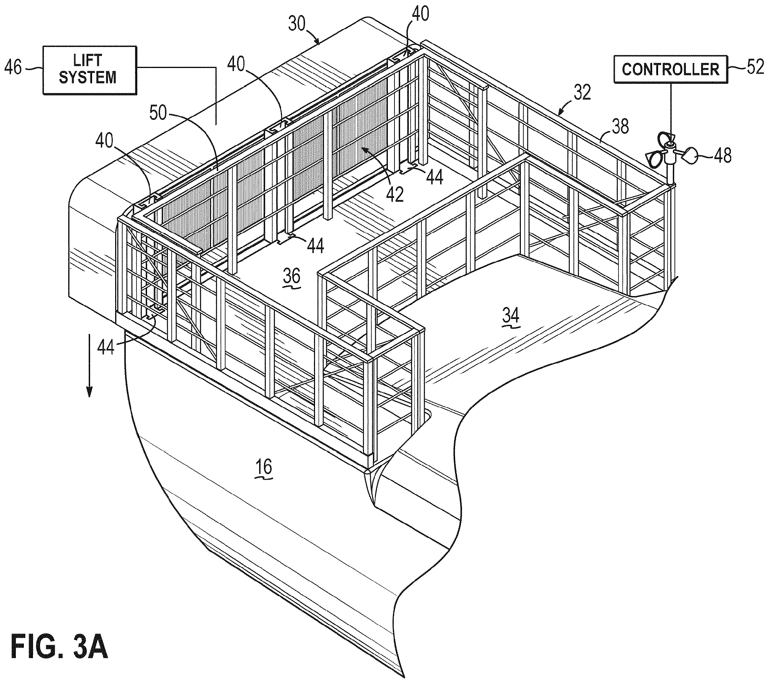

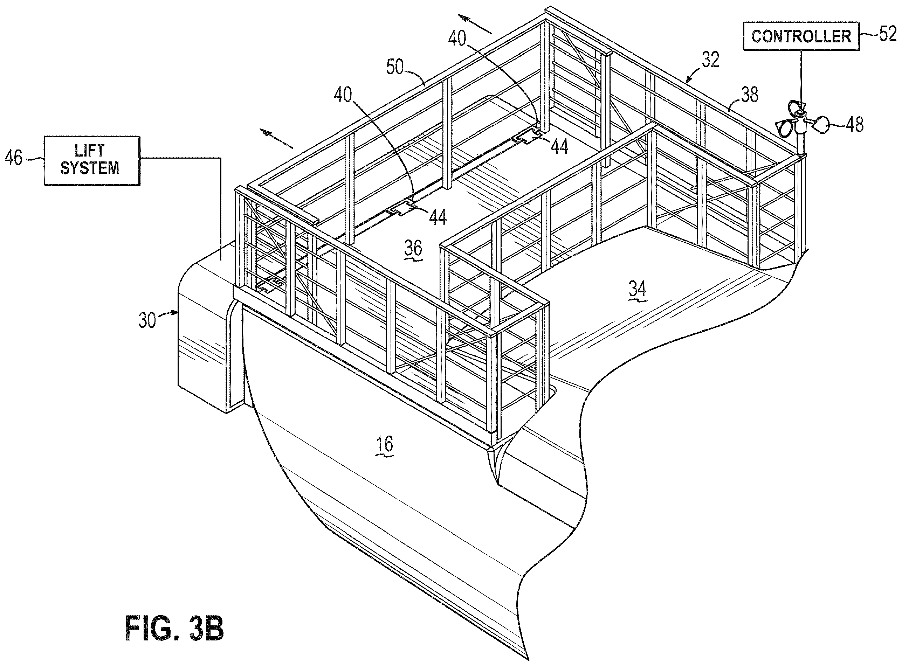

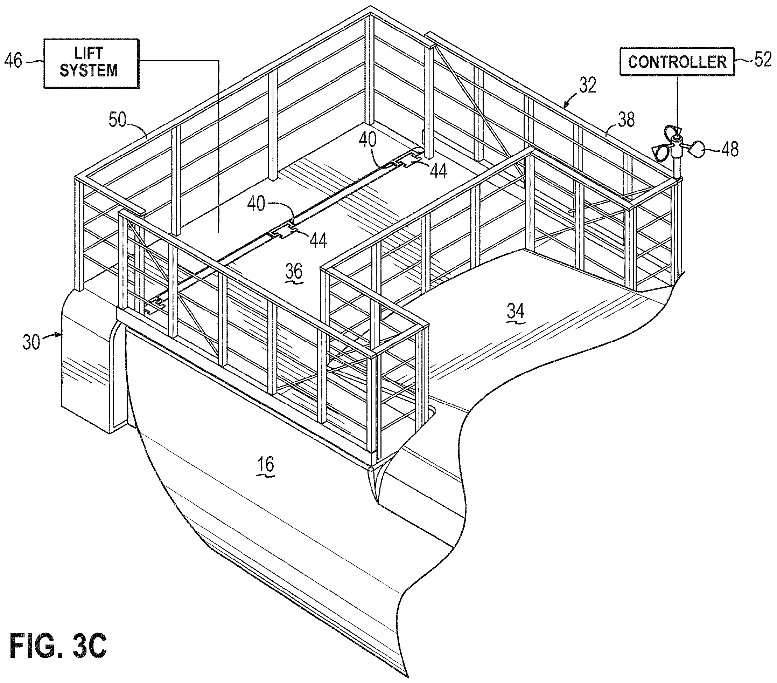

A second embodiment of the cooler 30 and the helihoist 32 arrangement is shown in Figs. 3A-3C. Reference numbers from the first embodiment (Figs. 2A-2B) are used on similar structures in the second embodiment. The second embodiment includes the helihoist 32 with the sidewalls 38 and an additional three-side sidewall structure 50 positioned directly in front of the cooler 30. The sidewall structure 50 is movably affixed to the sidewalls 38 and/or the platform 36 of the helihoist 32. In Fig. 3B, the sidewall structure 50 is in the stowed position (e.g., a first operative position of the cooler). The sidewall structure 50 can then be released from the sidewalls 38 and/or the platform 36 and moved laterally out over the cooler 30 as illustrated by the arrows in Fig. 3B. Fig. 3C shows the cooler 30 in the stowed position and the sidewall structure 50 positioned directly over the cooler 30. In that extended position (e.g., a second operative position), the sidewall structure 50 may be secured to any combination of the top of the cooler 30, the platform 36, and the sidewalls 38. It will be appreciated that other sidewall structures besides the exemplary sidewall structure 50 of Fig. 2 may be used to create a safety barrier around the top of the cooler 30 when the cooler is in the stowed position. For example, an accordion-style sidewall could be employed were the sidewall is made up of two or more panels that are hinged together and can unfold away from the platform 36 out over the top of the cooler 30.

By locating the cooler 30 in the stowed position and securing the sidewall structure 50 over the top of the cooler 30, the effective working area of the platform 36 has been extended farther away from the rotor 14 and, advantageously, away from the blades 20. In this configuration, the service technicians can walk on the top of the cooler 30 or a secondary platform (not shown) placed on or over the cooler 30 and receive materials from a hoovering helicopter or a landing airborne vehicle positioned further away from the blades 20. In many wind turbine installations, the maximum rotor diameter of a helicopter delivering materials to the helihoist 32 is 11 meters and is limited by the distance of the platform from the blades 20. A helicopter with a rotor diameter of 11 meters has a specific maximum load carrying capacity. A helicopter with a larger diameter rotor will typically have a higher maximum load carrying capacity. Thus, by increasing the effective working area of the platform 36, helicopters with larger rotor diameters, e.g., up to 14 meters, may be used. Using a helicopter with a larger load carrying capacity means a heavier component can be lifted to the helihoist or more components may be carried to the helihoist and unloaded during a single trip.

The cooler 30 may be lowered to the stowed position without moving the sidewall structure 50 over top of the cooler 30 as shown in Fig. 3B. As discussed above regarding the first embodiment in Figs. 2A and 2B, when the winds at or approaching the nacelle 16 reach a critical wind speed as measured by the wind sensor 48, for example, the controller 52 may be configured to move the cooler 30 from the operable position (Fig. 3A) to the stowed position (Fig. 3B) or the intermediate position to protect the cooler from such high winds. In such high wind conditions, the sidewall structure 50 remains affixed to the sidewalls 38 and/or the platform 36.

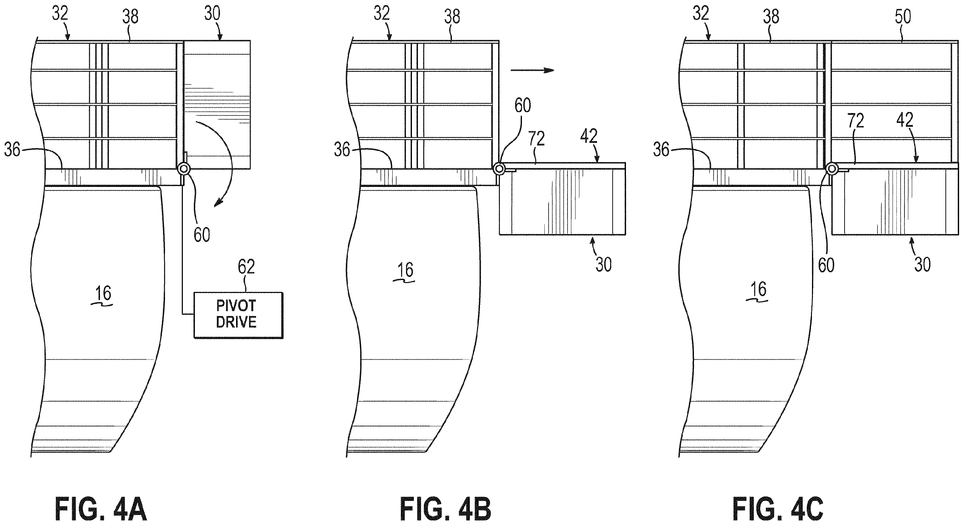

A third embodiment of the cooler 30 and the helihoist 32 arrangement is shown in Figs. 4A-4C. In this embodiment, the cooler 30 is pivotally connected to the platform 36 of the helihoist 32 via a pivot member 60, such as a hinge. In one embodiment, the pivot member 60 may be attached to the front, lower edge of the cooler 30 such that in the operable position the cooler 30 is not generally located over the nacelle roof 34 or the platform 36. The cooler 30 is in the normal, operable position in Fig. 4A and in the stowed position in Fig. 4B. The cooler may also be moved to an intermediate position (not shown) somewhere between the normal, operable position and the stowed position. A pivot drive 62 may be used to rotate the cooler from the operable position to the stowed position and back again to the operable position. When the cooler 30 is in the stowed position, the front face 42 of the cooler 30 may be used to increase the effective working area of the platform 36. As shown in Fig. 4C, the sidewall structure 50 may be positioned atop the cooler 30 to create a protective barrier around the cooler 30. To protect the front face 42 of the cooler 30 from being damaged by service technicians when the cooler 30 is in the stowed position, a protective barrier, such as a grate 72, may be laid over the front face 42 of the cooler 30 so that service technicians may walk on the protective barrier instead of the front face 42. Such a grate may, for example, be directly attached to the front face of the cooler, pivotally connected to the top of the cooler when not in use, or be movable with the sidewall structure 50.

In another aspect of the third embodiment, the nacelle 16 may include the wind sensor 48 for monitoring the speed of the wind at or approaching the nacelle 16. The wind sensor 48 may be operably coupled to the controller 52 that may be configured to pivot the cooler 30 from the normal, operable position to the stowed position when the wind reaches a predetermined critical wind speed. For example, the wind turbine may reduce production at wind speeds above 25 m/s and completely shut down its production when the wind speed increases above 30 m/s and thus the controller 52 may be configured to pivot the cooler 30 to the intermediate position and continue operation at reduced capacity between 25 and 30 m/s and to the stowed position to protect the cooler 30 at higher wind speeds. The controller 52 may be configured to move the cooler 30 back to the normal operable position after the winds drop below the above threshold for a predefined period of time, for example, at least a period of 30 minutes. The wind turbine 10 may also include a manual control that a service technician could use to move the cooler 30 between the operable, intermediate, and stowed positions.

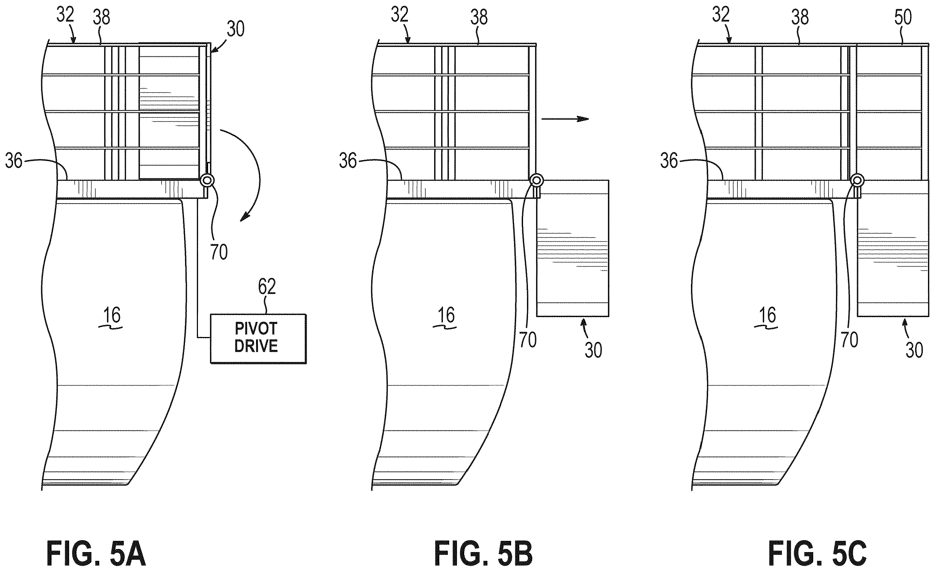

A fourth embodiment of the cooler 30 and the helihoist 32 arrangement is shown in Figs. 5A-5C. In this arrangement the cooler 30 is pivotally connected to the platform 36 of the helihoist 32 via a pivot member 70, such as a hinge. In one embodiment, the pivot member 70 may be attached to the rear, lower edge of the cooler 30 such that in the operable position the cooler 30 lies over the platform 36 as shown in Fig. 5A. Similar to the other embodiments, the cooler 30 may be moved from the operable position (Fig. 5A) to the stowed position (Fig. 5B) via the controller 52 operatively coupled to the pivot drive 62 should the wind sensor 48 measure critical wind speeds. This embodiment may also include a manual control that a service technician could use to move the cooler 30 between the operable and stowed positions. In one embodiment, the sidewall structure 50 may be positioned atop the cooler 30 in the stowed position in order to increase the effective working area of the platform 36 as shown in Fig. 5C. To this end, the wind turbine may include a wind sensor and controller as described above.

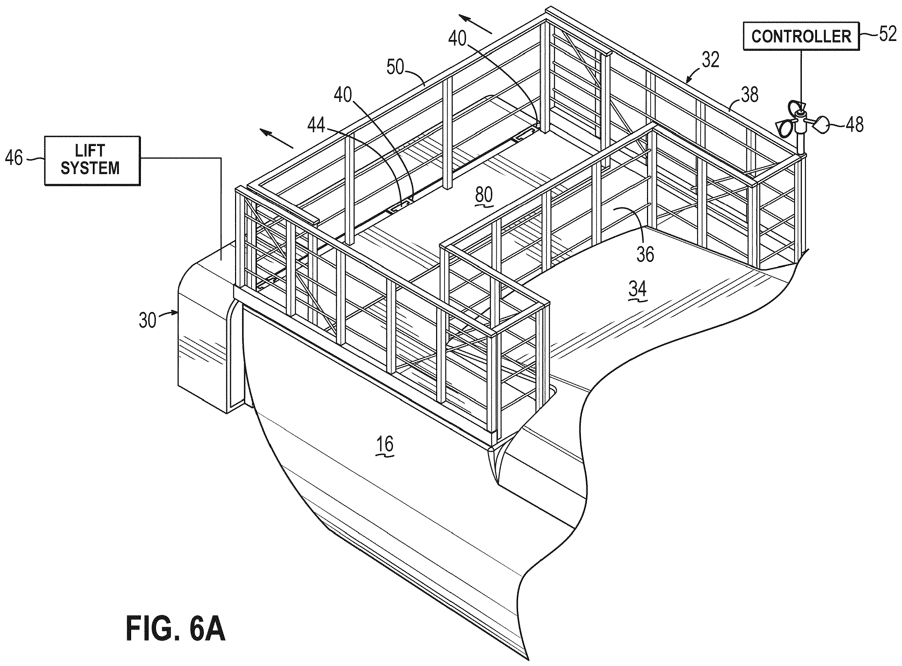

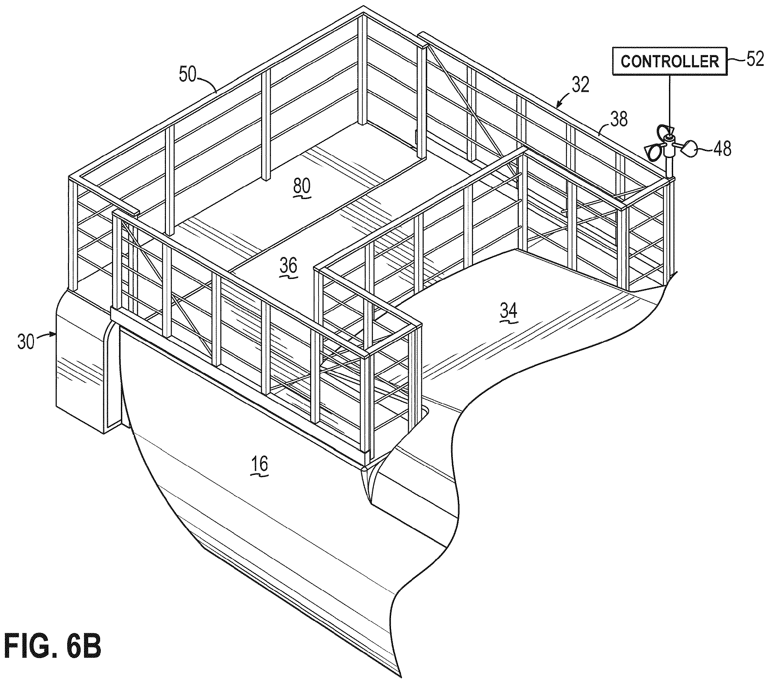

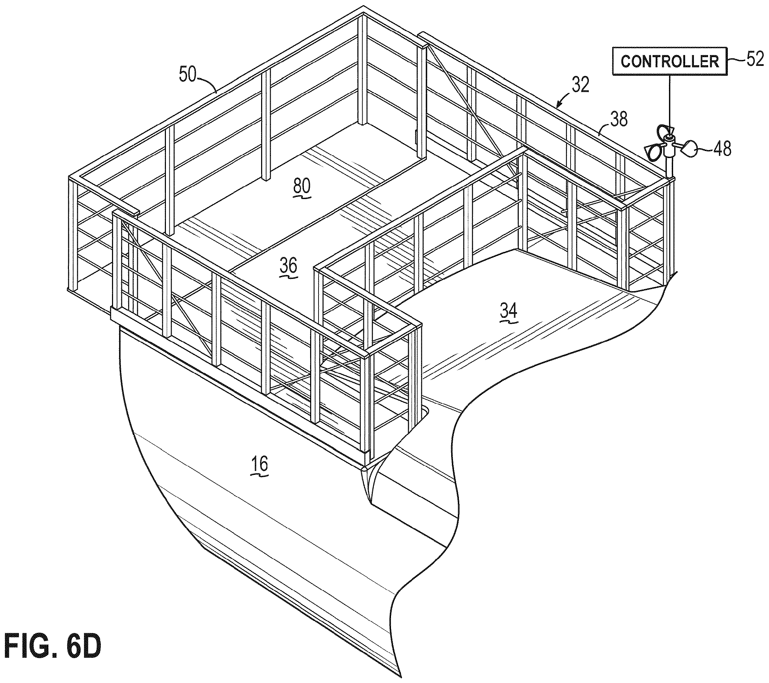

A fifth embodiment of the cooler 30 and the helihoist 32 arrangement is shown in Figs. 6A and 6B. This fifth embodiment is functionally similar to the second embodiment shown in Figs. 3A-3C. In this embodiment, however, the helihoist 32 further includes a secondary platform 80 (such a metal plate) which is movable relative to the platform 36 between a retracted position (Fig. 6A) and an extended position (Fig. 6B). The sidewall structure 50 may be affixed to and movable with the secondary platform 80. By employing the secondary platform 80 in this embodiment, service technicians may work on the secondary platform 80 in the extended position without having to step directly on the cooler, which may over time degrade the integrity of the surface of the cooler 30. Also, in this embodiment, the platform 36 has a first working surface which is configured to be expandable to form a second working surface, wherein the second working surface is greater than the first working surface. When the secondary platform 80 is in the extended position (Fig. 6B), the secondary platform 80 forms at least part of the secondary working surface. To the extent the cooler 30 supports the secondary platform 80, the cooler forms at least part of the platform 36. While Fig. 6B shows the secondary platform 80 positioned directly over the cooler 30 (or even short of the end of the cooler), it will be appreciated that the secondary platform 80 may be sized and arranged such that at least part of the secondary platform 80 extends beyond the cooler 30 in a direction away from the rotor 14 to increase the second working surface even further. Like the second embodiment discussed above, when the winds at or approaching the nacelle 16 reach a critical wind speed as measured by the wind sensor 48, for example, the controller 52 may be configured to move the cooler 30 from the operable position to the stowed position (Fig. 6A) or the intermediate position to protect the cooler from such high winds. In such high wind conditions, the sidewall structure 50 remains affixed to the sidewalls 38 and/or the platform 36 (Fig. 6A).

When the cooler 30 is used as part of the platform 36 (Fig. 3C) or supports the secondary platform 80 (Fig. 6B), the nacelle 16 may comprise a support scaffold (not shown) extending from the rear end of the nacelle 16 to support the cooler 30 in the intermediate and/or stored position and/or support the secondary platform 80 or some kind of mechanical stop.

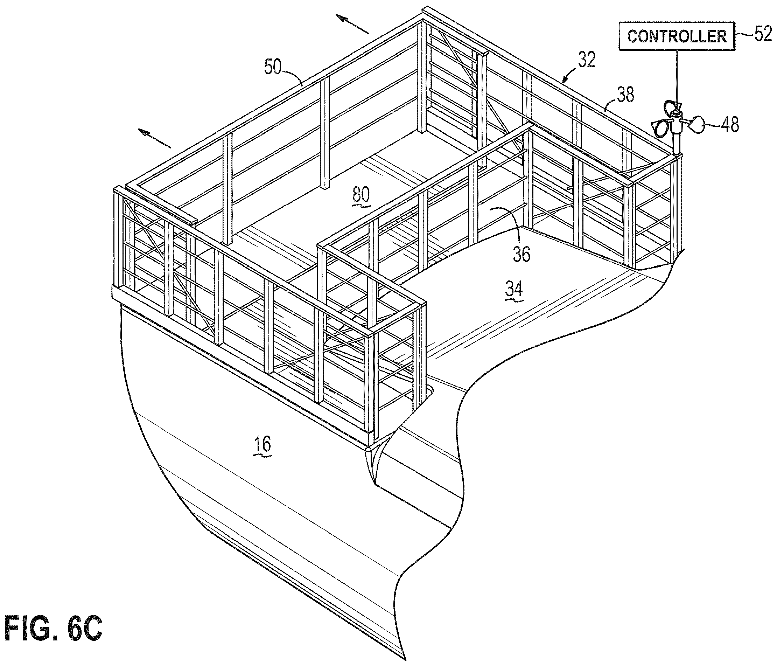

In the embodiment shown in Figs. 6A an 6B, the cooler 30 must be moved downward from its operative position to its stowed position, before the secondary platform 80 may be moved to its extended position over the cooler 30. In some wind turbine configurations, the nacelle 16 may not include the cooler 30 positioned behind the nacelle 16 as illustrated in Fig. 6C. With the cooler 30 absent from behind the nacelle 16, the secondary platform 80 may be moved to its retracted position to its extended position without having to first move the cooler 30 to its stowed position. Similar to the embodiment in Figs. 6A and 6B, the platform 36 has a first working surface which is configured to be expandable to form a second working surface, wherein the second working surface is greater than the first working surface. When the secondary platform 80 is in the extended position (Fig. 6C), the secondary platform 80 forms at least part of the second working surface. Thus, embodiments of the invention may include an expandable helihoist platform with or without having a cooler associated therewith.

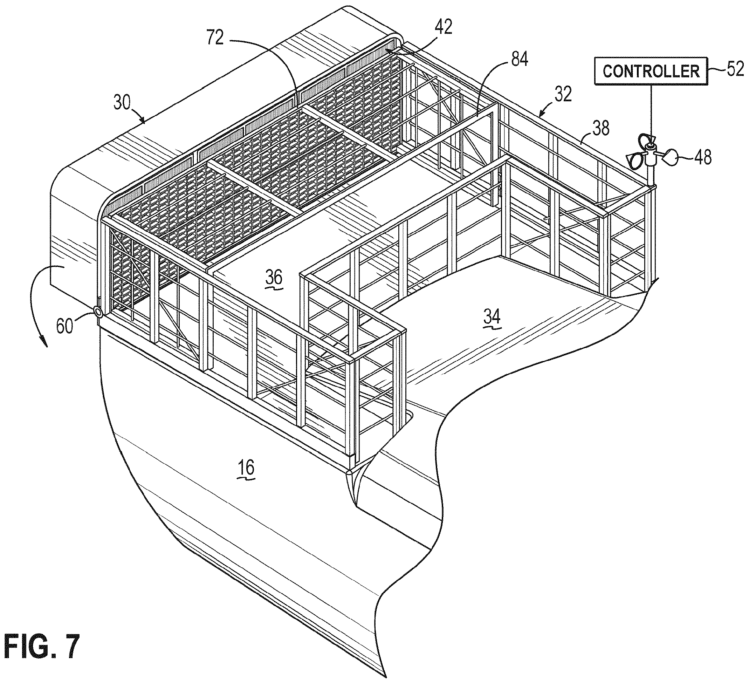

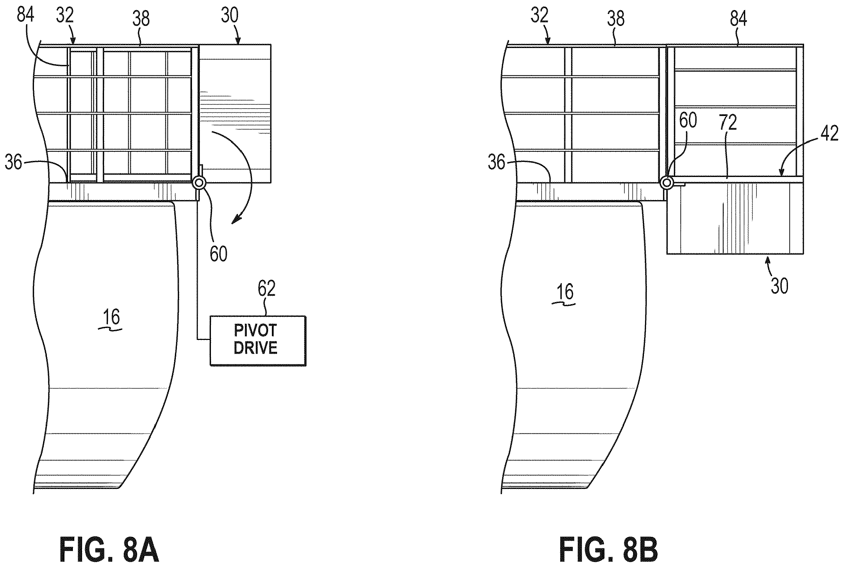

A sixth embodiment of the cooler 30 and the helihoist 32 arrangement is shown in Figs. 7, 8A, and 8B. In this embodiment, a three-sided sidewall structure 84 is affixed to and extends outwardly from the protective barrier (grate) 72, which is positioned in front of and connected to the front face 42 of the cooler 30. As shown in Fig. 7, when the cooler 30 is in the operable position, the sidewall structure 84 nests inside the sidewalls 38 and the long side of the sidewall structure 84 forms a roof-like structure over the platform 36. As shown in Fig. 8A, this embodiment includes the pivot member 60 and the pivot drive 62 described above with respect to the third embodiment shown in Figs. 4A-4C. Fig. 8B shows the cooler 30 rotated approximately 90 degrees from its operable position (Fig. 8A). Because the sidewall structure 84 is affixed to the grate 72, the sidewall structure 84 pivots with the cooler 30. Consequently, as soon as the cooler 30 reaches the position in Fig. 8B, a service technician may walk onto the protective barrier (grate) 72 and be protected by the sidewall structure 84. In contrast, in embodiment three described above, the sidewall structure 50 needs to be moved out over the cooler 30 before a service technician may use the protective barrier (grate) 72 as a working surface. In this sixth embodiment, the rotated cooler 30 (Fig. 8B) with its protective barrier (grate) 72 and sidewall structure 84 increases (expands) the effective working surface of the platform 36.

Like the third embodiment discussed above, when the wind sensor 48 reads certain wind speed, the controller 52 may be configured to pivot the cooler 30 to the intermediate position or the stowed position (Fig. 8B) to protect the cooler 30 from such high wind speeds. The controller 52 may be configured to move the cooler 30 back to the normal operable position (Fig. 8A) after the winds drop below the above threshold for a predefined period of time, for example, at least a period of 30 minutes. The wind turbine 10 may also include a manual control that a service technician could use to move the cooler 30 between the operable, intermediate, and stowed positions.

While the present invention has been illustrated by a description of various preferred embodiments and while these embodiments have been described in some detail, it is not the intention of the Applicant to restrict or in any way limit the scope of the appended claims to such detail. Additional advantages and modifications will readily appear to those skilled in the art. Thus, the various features of the invention may be used alone or in any combination depending on the needs and preferences of the user.

## Claims

1. A wind turbine (10), comprising:
a tower (12);
a nacelle (16) disposed on the tower (12) and including a nacelle roof (34);
a rotor (14) including a hub (18) and at least one wind turbine blade (20), the rotor (14) operatively coupled to a generator (26); and
a helihoist (32) affixed to the nacelle roof (34), the helihoist (32) having a platform (36) with a first working surface, wherein the platform (36) is configured to be expandable to form a second working surface, wherein the second working surface is greater than the first working surface, **characterized in that** the helihoist (32) further comprises:
a sidewall (38) surrounding at least a portion of the first working surface; and
a sidewall structure (50) movable between a first operative position and a second operative position, the sidewall structure (50) surrounding at least a portion of the second working surface when in the second operative position.

2. The wind turbine (10) of claim 1, further comprising a cooler (30) mounted to the nacelle (16) and having an exposed wind area operable to remove heat from heat-generating components of the wind turbine (10), wherein the cooler (30) is movable between a first position and a second position, and wherein at least a portion of the cooler (30) forms part of the second working surface when in the second position.

3. The wind turbine (10) of claim 2, wherein the first position is an operable position such that the exposed wind area of the cooler (30) is maximized.

4. The wind turbine (10) of claim 3, wherein the second position is a stowed position such that the exposed wind area of the cooler (30) is minimized, wherein the cooler (30) is positioned vertically at least partially behind the nacelle (16) in the second position, preferably the cooler (30) is positioned vertically completely behind the nacelle (16) in the vertical direction.

5. The wind turbine (10) of claim 2, wherein the cooler (30) is slidably mounted to the nacelle (16), the cooler (30) being slidably movable between the first position and the second position.

6. The wind turbine (10) of claim 5, wherein the cooler (30) is slidably movable to a third position between the first position and the second position, wherein the third position is an intermediate cooler position such that the exposed wind area of the cooler (30) is smaller than the exposed wind area in the first position, but larger than in the second position, wherein the cooler (30) in the intermediate cooler position remains operable to remove heat from heat-generating components of the wind turbine (10).

7. The wind turbine (10) of any of claims 2 to 6, further comprising a wind sensor (48) and a controller (52) operably coupled to the wind sensor (48), the controller (52) adapted to move the cooler (30) from the first position to the second position when the wind sensor (48) measures a predetermined critical wind speed.

8. The wind turbine (10) of claim 2, wherein the cooler (30) is pivotally connected to the nacelle (16) such that the cooler (30) is pivotable between the first position and the second position.

9. The wind turbine (10) of claim 1, wherein the helihoist (32) further includes a secondary platform (80) movable relative to the platform (36) between a retracted position to an extended position, wherein when the secondary platform (80) is in the extended position, the secondary platform (80) forms at least part of the second working surface.

10. A method of operating a wind turbine (10), comprising:
providing the wind turbine (10) with a tower (12), a nacelle (16) disposed on the tower (12) and including a nacelle roof (34), a rotor (14) including a hub (18) and at least one wind turbine blade (20), the rotor (14) operatively coupled to a generator (26), a helihoist (32) affixed to the nacelle roof (34), the helihoist (32) having a platform (36), and a cooler (30) mounted to the nacelle (16) and having an exposed wind area operable to remove heat from heat-generating components of the wind turbine (10); and
moving the cooler (30) from a first position to a second position, wherein the exposed wind area is smaller in the second position than in the first, **characterized in that** the platform (36) has a perimeter, the helihoist (32) includes a sidewall (38) affixed to and surrounding at least a portion of the perimeter of the platform (36), the platform (36) further includes a sidewall structure (50) movable between a first sidewall structure position and a second sidewall structure position, wherein the method further comprises:
moving the sidewall structure (50) from the first sidewall structure position where the sidewall structure (50) is disposed atop the platform (36) to the second sidewall structure position where the sidewall structure (50) is disposed atop the cooler (30).

11. The method of operating a wind turbine (10) of claim 10, wherein the cooler (30) is slidably mounted to the nacelle (16), wherein the moving step further comprises sliding the cooler (30) from the first position to the second position.

12. The method of operating a wind turbine (10) of claim 10, wherein the cooler (30) is pivotally connected to the nacelle (16), wherein the moving step further comprises pivoting the cooler (30) from the first position to the second position.

13. The method of operating a wind turbine (10) of any of claims 10-12, further comprising:
measuring a wind speed acting on the cooler (30); and
moving the cooler (30) from the first position to the second position when the wind speed exceeds a predetermine critical wind speed.

## Patentansprüche

1. Windkraftanlage (10), umfassend:
einen Turm (12);
eine Gondel (16), die auf dem Turm (12) angeordnet ist und ein Gondeldach (34) beinhaltet;
einen Rotor (14), der eine Nabe (18) und mindestens ein Windkraftanlageblatt (20) beinhaltet, wobei der Rotor (14) betriebsfähig mit einem Generator (26) gekoppelt ist; und
ein Helikopterhub (32), der an dem Gondeldach (34) angebracht ist, wobei der Helikopterhub (32) eine Plattform (36) mit einer ersten Arbeitsoberfläche aufweist, wobei die Plattform (36) dazu ausgelegt ist, erweiterbar zu sein, um eine zweite Arbeitsoberfläche zu bilden, wobei die zweite Arbeitsoberfläche größer als die erste Arbeitsoberfläche ist, **dadurch gekennzeichnet, dass** der Helikopterhub (32) weiter Folgendes umfasst:
eine Seitenwand (38), die mindestens einen Abschnitt der ersten Arbeitsoberfläche umgibt; und
eine Seitenwandstruktur (50), die zwischen einer ersten Betriebsposition und einer zweiten Betriebsposition beweglich ist, wobei die Seitenwandstruktur (50) mindestens einen Abschnitt der zweiten Arbeitsoberfläche umgibt, wenn sie sich in der zweiten Betriebsposition befindet.

2. Windkraftanlage (10) nach Anspruch 1, weiter umfassend einen Kühler (30), der an der Gondel (16) montiert ist und eine freiliegende Windfläche aufweist, die betriebsfähig ist, Wärme von wärmeerzeugenden Komponenten der Windkraftanlage (10) abzuführen, wobei der Kühler (30) zwischen einer ersten Position und einer zweiten Position beweglich ist und wobei mindestens ein Abschnitt des Kühlers (30) einen Teil der zweiten Arbeitsoberfläche bildet, wenn er sich in der zweiten Position befindet.

3. Windkraftanlage (10) nach Anspruch 2, wobei die erste Position eine Betriebsposition ist, sodass die freiliegende Windfläche des Kühlers (30) maximiert ist.

4. Windkraftanlage (10) nach Anspruch 3, wobei die zweite Position eine verstaute Position ist, sodass die freiliegende Windfläche des Kühlers (30) minimiert ist, wobei der Kühler (30) vertikal mindestens teilweise hinter der Gondel (16) in der zweiten Position positioniert ist, wobei bevorzugt der Kühler (30) vertikal vollständig hinter der Gondel (16) in der vertikalen Richtung positioniert ist.

5. Windkraftanlage (10) nach Anspruch 2, wobei der Kühler (30) schiebbar an der Gondel (16) montiert ist, wobei der Kühler (30) schiebbar zwischen der ersten Position und der zweiten Position beweglich ist.

6. Windkraftanlage (10) nach Anspruch 5, wobei der Kühler (30) schiebbar zu einer dritten Position zwischen der ersten Position und der zweiten Position beweglich ist, wobei die dritte Position eine Zwischenkühlerposition ist, sodass die freiliegende Windfläche des Kühlers (30) kleiner als die freiliegende Windfläche in der ersten Position, aber größer als in der zweiten Position ist, wobei der Kühler (30) in der Zwischenkühlerposition betriebsfähig bleibt, Wärme von wärmeerzeugenden Komponenten der Windkraftanlage (10) abzuführen.

7. Windkraftanlage (10) nach einem der Ansprüche 2 bis 6, weiter umfassend einen Windsensor (48) und eine Steuereinheit (52), die betriebsfähig mit dem Windsensor (48) gekoppelt ist, wobei die Steuereinheit (52) dazu geeignet ist, den Kühler (30) von der ersten Position zu der zweiten Position zu bewegen, wenn der Windsensor (48) eine vorgegebene kritische Windgeschwindigkeit misst.

8. Windkraftanlage (10) nach Anspruch 2, wobei der Kühler (30) schwenkbar mit der Gondel (16) verbunden ist, sodass der Kühler (30) zwischen der ersten Position und der zweiten Position schwenkbar ist.

9. Windkraftanlage (10) nach Anspruch 1, wobei der Helikopterhub (32) weiter eine Sekundärplattform (80) beinhaltet, die relativ zu der Plattform (36) zwischen einer eingefahrenen Position und einer ausgefahrenen Position beweglich ist, wobei, wenn die Sekundärplattform (80) in der ausgefahrenen Position ist, die Sekundärplattform (80) mindestens einen Teil der zweiten Arbeitsoberfläche bildet.

10. Verfahren zum Betreiben einer Windkraftanlage, umfassend:
Bereitstellen der Windkraftanlage (10) mit einem Turm (12), einer Gondel (16), die auf dem Turm (12) angeordnet ist und ein Gondeldach (34) beinhaltet, einem Rotor (14), der eine Nabe (18) beinhaltet und mindestens einem Windkraftanlagenblatt (20), wobei der Rotor (14) betriebsfähig mit einem Generator (26) gekoppelt ist, einem Helikopterhub (32), der an dem Gondeldach (34) befestigt ist, wobei der Helikopterhub (32) eine Plattform (36) aufweist, und einem Kühler (30), der an der Gondel (16) montiert ist und eine freiliegende Windfläche aufweist, die betriebsfähig ist, Wärme von wärmeerzeugenden Komponenten der Windkraftanlage (10) abzuführen; und
Bewegen des Kühlers (30) von einer ersten Position zu einer zweiten Position, wobei die freiliegende Windfläche in der zweiten Position kleiner als in der ersten ist, **dadurch gekennzeichnet, dass** die Plattform (36) einen Umfang aufweist, der Helikopterhub (32) eine Seitenwand (38) beinhaltet, die an mindestens einem Abschnitt des Umfangs der Plattform (36) befestigt ist und diesen umgibt, die Plattform (36) weiter eine Seitenwandstruktur (50) beinhaltet, die zwischen einer ersten Seitenwandstrukturposition und einer zweiten Seitenwandstrukturposition beweglich ist, wobei das Verfahren weiter Folgendes umfasst:
Bewegen der Seitenwandstruktur (50) von der ersten Seitenwandstrukturposition, wo die Seitenwandstruktur (50) oberhalb der Plattform (36) angeordnet ist, zu der zweiten Seitenwandstrukturposition, wo die Seitenwandstruktur (50) oberhalb des Kühlers (30) angeordnet ist.

11. Verfahren zum Betreiben einer Windkraftanlage (10) nach Anspruch 10, wobei der Kühler (30) schiebbar an der Gondel (16) montiert ist, wobei der Bewegungsschritt weiter Schieben des Kühlers (30) von der ersten Position zu der zweiten Position umfasst.

12. Verfahren zum Betreiben einer Windkraftanlage (10) nach Anspruch 10, wobei der Kühler (30) schwenkbar mit der Gondel (16) verbunden ist, wobei der Bewegungsschritt weiter Schwenken des Kühlers (30) von der ersten Position zu der zweiten Position umfasst.

13. Verfahren zum Betreiben einer Windkraftanlage (10) nach einem der Ansprüche 10-12, weiter umfassend:
Messen einer Windgeschwindigkeit, die auf den Kühler (30) wirkt; und
Bewegen des Kühlers (30) von der ersten Position zu der zweiten Position, wenn die Windgeschwindigkeit eine vorgegebene kritische Windgeschwindigkeit übersteigt.

## Revendications

1. Éolienne (10), comprenant :
une tour (12) ;
une nacelle (16) disposée sur la tour (12) et incluant un toit de nacelle (34) ;
un rotor (14) incluant un moyeu (18) et au moins une pale d'éolienne (20), le rotor (14) étant couplé de manière opérationnelle à un générateur (26) ; et
un hélitreuil (32) fixé au toit de nacelle (34), l'hélitreuil (32) présentant une plateforme (36) avec une première surface de travail, dans laquelle la plateforme (36) est configurée pour être extensible afin de former une seconde surface de travail, dans laquelle la seconde surface de travail est plus grande que la première surface de travail, **caractérisée en ce que** l'hélitreuil (32) comprend en outre :
une paroi latérale (38) entourant au moins une partie de la première surface de travail ; et
une structure de paroi latérale (50) mobile entre une première position opérationnelle et une seconde position opérationnelle, la structure de paroi latérale (50) entourant au moins une partie de la seconde surface de travail lorsqu'elle se trouve dans la seconde position opérationnelle.

2. Éolienne (10) selon la revendication 1, comprenant en outre un refroidisseur (30) monté sur la nacelle (16) et présentant une surface exposée au vent pouvant fonctionner pour éliminer de la chaleur provenant de composants générateurs de chaleur de l'éolienne (10), dans laquelle le refroidisseur (30) est mobile entre une première position et une deuxième position, et dans laquelle au moins une partie du refroidisseur (30) fait partie de la seconde surface de travail lorsqu'il se trouve dans la deuxième position.

3. Éolienne (10) selon la revendication 2, dans laquelle la première position est une position fonctionnelle de sorte que la surface exposée au vent du refroidisseur (30) soit maximisée.

4. Éolienne (10) selon la revendication 3, dans laquelle la deuxième position est une position rentrée de sorte que la surface exposée au vent du refroidisseur (30) soit minimisée, dans laquelle le refroidisseur (30) est positionné verticalement au moins partiellement derrière la nacelle (16) dans la deuxième position, de préférence le refroidisseur (30) est positionné verticalement complètement derrière la nacelle (16) dans la direction verticale.

5. Éolienne (10) selon la revendication 2, dans laquelle le refroidisseur (30) est monté de manière coulissante sur la nacelle (16), le refroidisseur (30) pouvant être déplacé de manière coulissante entre la première position et la deuxième position.

6. Éolienne (10) selon la revendication 5, dans laquelle le refroidisseur (30) peut être déplacé de manière coulissante vers une troisième position entre la première position et la deuxième position, dans laquelle la troisième position est une position intermédiaire de refroidisseur de sorte que la zone exposée au vent du refroidisseur (30) soit plus petite que la zone exposée au vent dans la première position, mais plus grande que dans la deuxième position, dans laquelle le refroidisseur (30) dans la position intermédiaire de refroidisseur continue de fonctionner pour éliminer de la chaleur provenant de composants générateurs de chaleur de l'éolienne (10).

7. Éolienne (10) selon l'une quelconque des revendications 2 à 6, comprenant en outre un capteur de vent (48) et un dispositif de commande (52) couplé de manière fonctionnelle au capteur de vent (48), le dispositif de commande (52) étant adapté pour déplacer le refroidisseur (30) de la première position à la deuxième position lorsque le capteur de vent (48) mesure une vitesse de vent critique prédéterminée.

8. Éolienne (10) selon la revendication 2, dans laquelle le refroidisseur (30) est raccordé de manière pivotante à la nacelle (16) de sorte que le refroidisseur (30) puisse pivoter entre la première position et la deuxième position.

9. Éolienne (10) selon la revendication 1, dans laquelle l'hélitreuil (32) inclut en outre une plateforme secondaire (80) mobile par rapport à la plateforme (36) entre une position rétractée et une position étendue, dans laquelle, lorsque la plateforme secondaire (80) est en position étendue, la plateforme secondaire (80) forme au moins une partie de la seconde surface de travail.

10. Procédé de fonctionnement d'une éolienne (10), comprenant :
la fourniture à l'éolienne (10) d'une tour (12), d'une nacelle (16) disposée sur la tour (12) et incluant un toit de nacelle (34), d'un rotor (14) incluant un moyeu (18) et au moins une pale d'éolienne (20), le rotor (14) étant couplé de manière opérationnelle à un générateur (26), d'un hélitreuil (32) fixé au toit de nacelle (34), l'hélitreuil (32) présentant une plateforme (36), et d'un refroidisseur (30) monté sur la nacelle (16) et présentant une zone exposée au vent pouvant fonctionner pour éliminer de la chaleur provenant de composants générateurs de chaleur de l'éolienne (10) ; et
le déplacement du refroidisseur (30) d'une première position à une deuxième position, dans lequel la surface exposée au vent est plus petite dans la deuxième position que dans la première, **caractérisé en ce que** la plateforme (36) présente un périmètre, l'hélitreuil (32) inclut une paroi latérale (38) fixée à et entourant au moins une partie du périmètre de la plateforme (36), la plateforme (36) inclut en outre une structure de paroi latérale (50) mobile entre une première position de structure de paroi latérale et une seconde position de structure de paroi latérale, dans lequel le procédé comprend en outre :
le déplacement de la structure de paroi latérale (50) de la première position de structure de paroi latérale où la structure de paroi latérale (50) est disposée au-dessus de la plateforme (36) à la seconde position de structure de paroi latérale où la structure de paroi latérale (50) est disposée au-dessus du refroidisseur (30).

11. Procédé de fonctionnement d'une éolienne (10) selon la revendication 10, dans lequel le refroidisseur (30) est monté de manière coulissante sur la nacelle (16), dans lequel l'étape de déplacement comprend en outre le coulissement du refroidisseur (30) de la première position à la deuxième position.

12. Procédé de fonctionnement d'une éolienne (10) selon la revendication 10, dans lequel le refroidisseur (30) est raccordé de manière pivotante à la nacelle (16), dans lequel l'étape de déplacement comprend en outre le pivotement du refroidisseur (30) de la première position à la deuxième position.

13. Procédé de fonctionnement d'une éolienne (10) selon l'une quelconque des revendications 10-12, comprenant en outre :
la mesure d'une vitesse de vent agissant sur le refroidisseur (30) ; et
le déplacement du refroidisseur (30) de la première position à la deuxième position lorsque la vitesse de vent dépasse une vitesse de vent critique prédéterminée.
